# EUROPÄISCHE PATENTSCHRIFT

(11) **EP 2 808 426 B1**
(45) Veröffentlichungstag und Bekanntmachung des Hinweises auf die Patenterteilung: **16.03.2016**
(21) Anmeldenummer: 14160952.9
(22) Anmeldetag: 20.03.2014
(51) Int. Cl.: C25D 5/10, C25D 5/36, C25D 5/50, C25D 7/06, B32B 15/01, C25D 5/48

(54) **Verfahren zur Beschichtung eines Stahlblechs mit einer Metallschicht**
Method for coating a steel plate with a metal layer
Procédé de revêtement d'une tôle d'acier au moyen d'une couche de métal

(30) Priorität: 27.05.2013 DE 102013105392
(43) Veröffentlichungstag der Anmeldung: 03.12.2014
(73) Patentinhaber: ThyssenKrupp Rasselstein GmbH, 56626 Andernach (DE)
(72) Erfinder: Oberhoffer, Helmut, Dr., 56727 St. Johann (DE); Liebscher, Benjamin, 56412 Welschneudorf (DE); Szesni, Anika, 56220 Kettig (DE); Sauer, Reiner, Dr., Heimbach-Weis 56566 (DE); Friedrich, Karl-Ernst, 47447 Moers (DE)
(74) Vertreter: Charrier, Rapp & Liebau

(56) Entgegenhaltungen:
- DE-A1- 1 496 835
- DE-A1-102011 000 984
- GB-A- 448 288
- US-A- 3 062 726
- US-A- 4 726 208
- US-A1- 2003 026 913

## Beschreibung

Die Erfindung betrifft ein Verfahren zur Beschichtung eines Stahlblechs mit einer Metallschicht gemäß dem Oberbegriff des Anspruchs 1 sowie eine Vorrichtung zur Durchführung dieses Verfahrens und mit einer Metallbeschichtung versehenes Stahlblech nach dem Oberbegriff des Anspruchs.

Aus dem Stand der Technik ist es bekannt, in Verfahren zur galvanischen Beschichtung von Stahlbändern mit einer Metallschicht, das sich mit einer Bandgeschwindigkeit bewegende Stahlband nacheinander durch mehrere hintereinander angeordnete Elektrolyt-Bäder zu leiten, in denen auf das Stahlband elektrolytisch eine vor Korrosion schützende Metallschicht abgeschieden wird. So ist es bspw. bei der Herstellung von Weißblech bekannt, ein Stahlband zur elektrolytischen Verzinnung durch mehrere in Bandlaufrichtung hintereinander angeordnete Verzinnungstanks zu leiten, in denen jeweils eine Zinnanode angeordnet ist, um das als Kathode geschaltete Stahlband elektrolytisch mit einer Zinnschicht zu beschichten. Typischerweise durchläuft das Stahlband dabei sequentiell fünf bis zehn solcher Verzinnungstanks, wobei in jedem Verzinnungstank in der Regel eine Zinnauflage von ca. 0,1 bis 0,7 g/m² abgeschieden wird. Dies ermöglicht es, bei möglichst hoher Bandgeschwindigkeit von bis zu 700 m/min in den einzelnen Verzinnungsbädern eine Stromdichte von weniger als 25 A/dm² einzustellen. Bei höheren Stromdichten besteht die Gefahr einer zu starken Wärmeentwicklung, welche zu einer Verschlechterung der Verzinnungsqualität führen kann, wenn die in den Verzinnungstanks entstehende Wärme nicht abgeführt werden kann.

Nach dem Abscheiden der Zinnschicht in einer für die Erzielung einer ausreichenden Korrosionsbeständigkeit erforderlichen Dicke, welche üblicherweise zwischen 0,5 und 12 g/m² liegt, wird die galvanisch abgeschiedene Zinnschicht durch Erhitzen des beschichteten Stahlbands aufgeschmolzen, um einerseits eine dünne Legierungsschicht am Übergang zwischen der Stahlbandoberfläche und der Zinnschicht und andererseits eine glänzende Zinnoberfläche zu erzeugen. Das Aufschmelzen der Zinnschicht erfolgt dabei üblicherweise konduktiv in einem Glühofen oder induktiv mittels elektromagnetischer Induktion in einem Induktionsofen. Aus der DE 10 2011 000 984 A1 ist auch bekannt, eine Zinnbeschichtung auf einem Stahlband durch Bestrahlung mit einer elektromagnetischen Strahlung hoher Leistungsdichte aufzuschmelzen, um an der Grenzschicht zwischen der Zinnbeschichtung und dem Stahlband eine dünne Legierungsschicht auszubilden.

Aus der US 4,726,208-A ist ein mehrstufiges Verfahren zum Verzinnen von Stahlblech bekannt, wobei in einer ersten Stufe eine erste dünne Beschichtung aus Zinn in einer Auflage von 0,05 lb per base box auf die Oberfläche des Stahlblechs zur Ausbildung einer Zinn-Flash-Beschichtung aufgebracht und anschließend mit dem Stahl des Stahlblechs legiert wird. Danach wird in einer zweiten Stufe auf einer Seite des Stahlblechs eine weitere Zinnschicht mit einer Auflage von wenigstens 0,20 lb per base box auf die Legierungsschicht aufgebracht, mittels einer Indulctionsheizung oberflächlich angeschmolzen und schließlich in einem Abschreckbad abgeschreckt. Beim oberflächlichen Aufschmelzen der in der zweiten Stufe aufgebrachten Zinnbeschichtung werden noch nicht legierte Bestandteile der ersten Zinnbeschichtung (flash coating) mit dem Stahl des Stahlblechs legiert.

Aus der DE 1 496 835-A und der US 3,285,838-A sind weiterhin Verfahren zur mehrstufigen, galvanischen Verzinnung eines Stahlblechs in einem sauren Galvanisienmgsbad bekannt, bei dem auf das Stahlblech zunächst eine dünne, aus Zinn bestehende Vorplattierung (flash coating) aufgebracht und diese Vorplattieningsschicht aus Zinn anschließend durch Erhitzen des Stahlblechs zur Verflüssigung gebracht wird. Nach der Verflüssigung der Vorplattierungsschicht wird in einem weiteren sauren Galvanisierungsbad eine weitere Zinnplattierung durchgeführt, um auf die Vorplattierungsschicht eine weitere Zinnschicht abzuscheiden. Die weitere Zinnschicht wird wiederum durch Erhitzen des Stahlblechs zur Verflüssigung gebracht. Das Gewicht der Vorverzinnungsschicht (Zinnschicht der Vorplattierung) beträgt dabei mindestens 22,7 Gramm pro Standardfläche ("base box"), was einer Beschichtungsauflage der Vorverzinnungsschicht von mindestens 1,14 g/m² entspricht. Zum Verflüssigen der Vorverzinnungsschicht wird das Stahlblech auf eine Temperatur zwischen 288°C und 454°C erhitzt.

Aus der US 3 062 726 ist ein weiteres Verfahren zur Verzinnung eines Stahlblechs bekannt, in dem zunächst eine erste dünne Zinnschicht auf dem Stahlblech abgeschieden und anschließend durch Erhitzen des Stahlblechs auf Temperaturen oberhalb der Schmelztemperatur des Zinns aufgeschmolzen wird. Danach wird das mit der ersten dünnen Zinnschicht beschichtete Stahlblech abgeschreckt und mit einer Beize behandelt und schließlich wird auf die erste dünne Zinnschicht eine zweite Zinnschicht aufgebracht. Die Dicke der ersten dünnen Zinnschicht entspricht dabei bevorzugt einer Auflage von 18-27 Gramm pro Standardfläche ("base box"), entsprechend einer Auflage von 0,9 g/m² bis 1,35 g/m².

Ein mehrstufiges Beschichtungsverfahren zur Verzinnung eines Stahlblechs ist auch aus der GB 448,288 bekannt.

Die aus dem Stand der Technik bekannten mehrstufigen Beschichtungsverfahren, in denen zunächst in einer ersten Stufe eine dünne erste Metallbeschichtung (flash coating) auf ein Stahlblech aufgebracht, die dünne Metallbeschichtung anschließend aufgeschmolzen und danach wenigstens eine weitere, dickere Metallschicht auf die erste Metallschicht aufgebracht wird, zeichnen sich durch eine gute Korrosionsbeständigkeit des beschichteten Stahlblechs aus. Allerdings ist das Herstellungsverfahren durch den Verfahrensschritt des Aufschmelzens der ersten dünnen Metallschicht aufwendig und energieintensiv, da für das Aufschmelzen der ersten dünnen Metallschicht das gesamte Stahlblech auf Temperaturen oberhalb der Schmelztemperatur des Beschichtungsmaterials der Metallschicht erhitzt werden muss. Ferner ist eine vergleichsweise hohe Gesamtdicke der aufgebrachten Metallschicht erforderlich, um eine gute Korrosionsbeständigkeit des beschichteten Stahlblechs zu erzielen.

Hiervon ausgehend liegt der Erfindung die Aufgabe zugrunde, die Korrosionsbeständigkeit eines mit einer Metallschicht beschichteten Stahlblechs sowie die Energie- und Ressourceneffizienz des Beschichtungsverfahrens zu verbessern. Es besteht weiterhin die Aufgabe, ein mit einer Metallschicht beschichtetes Stahlblechs hoher Korrosionsbeständigkeit bereit zu stellen, welches gleichzeitig eine gute Schweißbarkeit und ein gutes Abstreckverhalten aufweist und geeignet ist für die Herstellung von Verpackungsbehältern, insbesondere Dosen.

Gelöst werden diese Aufgaben mit dem Verfahren mit den Merkmalen des Anspruchs 1 und der Vorrichtung mit den Merkmalen des Anspruchs 14 sowie mit einem Stahlblech mit den Merkmalen des Anspruchs 15. Bevorzugte Ausführungsformen des erfindungsgemäßen Verfahrens sind den abhängigen Ansprüchen zu entnehmen.

In dem erfindungsgemäßen Verfahren wird zunächst eine erste dünne Metallschicht als Vorplattierung auf das Stahlblech aufgebracht, bevorzugt mittels galvanischer Abscheidung einer dünnen Metallschicht in einem Elektrolysebad. Die dünne Metallschicht der Vorplattierung wird danach aufgeschmolzen, indem das mit der Vorplattierung versehene Stahlblech auf Temperaturen oberhalb der Schmelztemperatur der Metallschicht erhitzt wird. Danach wird wenigstens eine weitere Metallschicht aus demselben Material wie die Metallschicht der Vorplattierung auf die Vorplattierung aufgebracht. Dies erfolgt bevorzugt ebenfalls durch galvanisches Abscheiden der weiteren Metallschicht auf die Metallschicht der Vorplattierung. Gemäß der Erfindung beträgt die Dicke der Metallschicht der Vorplattierung höchstens 200 mg/m² und ist damit wesentlich dünner als die Dicken der Vorplattierungsschichten, die aus den eingangs genannten Veröffentlichungen des Stands der Technik bekannt sind. Die weitere Metallschicht, welche in dem erfindungsgemäßen Verfahren auf die aufgeschmolzene Metallschicht der Vorplattierung aufgebracht wird, ist dabei regelmäßig dicker als die dünne Metallschicht der Vorplattierung., bspw. um einen Faktor von ca. 2 bis 120 und bevorzugt um einen Faktor von 4 bis 60.

Das Aufschmelzen der dünnen Metallschicht der Vorplattierung erfolgt - anders als bei den aus dem Stand der Technik bekannten Verfahren - mittels Bestrahlung der dünnen Metallschicht mit einer Strahlung hoher Energiedichte, nämlich einer elektromagnetischen Strahlung, insbesondere eine Laserstrahlung, oder einem Elektronenstrahl. Die Bestrahlung der Metallschicht erfolgt dabei zweckmäßig durch Einstrahlen eines gerichteten Strahlenbündels auf die Oberfläche der Metallschicht, wobei es sich bei dem Strahlenbündel entweder um eine elektromagnetische Strahlung und insbesondere um eine Laserstrahlung oder um einen Elektronenstrahl handeln kann. Zweckmäßig wird für das Aufschmelzen der dünnen Metallschicht der Vorplattierung eine Strahlungsquelle, bspw. ein Laser oder eine Elektronenkanone verwendet, mit der in die die dünne Metallschicht der Vorplattierung eine so hohe Energie eingestrahlt wird, dass die Vorplattierung vollständig über ihre gesamt Dicke von höchsten 200 mg/m² bis zur Grenzschicht zum Stahlblech aufschmilzt. Dadurch wird die dünne Metallschicht der Vorplattierung zumindest im Wesentlichen vollständig in eine Legierungsschicht umgewandelt, die aus Eisenatomen des Stahlblechs und Atomen des Metalls der Metallschicht besteht.

Durch das vollständige Aufschmelzen der dünnen Metallschicht der Vorplattierung bildet sich an der Grenzschicht zwischen der dünnen Metallschicht der Vorplattierung und dem Stahlblech eine Legierungsschicht aus, welche aus Atomen des Metalls der Metallschicht und aus Eisenatomen des Stahlblechs besteht. Die dünne Metallschicht der Vorplattierung wird durch das vollständige Aufschmelzen mittels Einstrahlung der elektromagnetischen Strahlung dabei zumindest weitgehend vollständig in eine dünne Legierungsschicht umgewandelt, d.h. nach dem Aufschmelzen der dünnen Metallschicht der Vorplattierung besteht diese zumindest im Wesentlichen aus einer Legierung aus Atomen des Metalls der Metallschicht und Eisenatomen des Stahlblechs.

Die mit der Strahlung in die dünne Metallschicht der Vorplattierung eingebrachte Energiedichte sowie die Bestrahlungszeit werden dabei zweckmäßig so ausgewählt, dass die dünne Metallschicht der Vorplattierung gerade vollständig über ihre gesamte Dicke bis zur Grenzschicht zum Stahlblech aufgeschmolzen wird, ohne dass ein wesentlicher Energieeintrag durch die Strahlung in das sich darunter befindliche Stahlblech erfolgt. Der Eintrag der Energiedichte wird so im Wesentlichen lokal auf die Dicke der dünnen Metallschicht der Vorplattierung beschränkt. Dadurch kann erheblich Energie gespart werden, weil das Stahlblech durch den lokal begrenzten Energieeintrag im oberflächennahen Bereich nicht nennenswert aufgeheizt wird. Die Bestrahlungszeit ist dabei von der Bandgeschwindigkeit des Stahlbands abhängig, mit der dieses durch die Beschichtungstanks geleitet wird, in denen das Stahlband mit der Metallschicht beschichtet wird. Bei Bandgeschwindigkeiten im Bereich von einigen Hundert Meter pro Minute ergeben sich kurze Bestrahlungszeiten im Bereich von µs. Es können zur Einstellung einer zweckmäßigen Bestrahlungszeit auch gepulste Strahlungsquellen, wie z.B. gepulste Laser verwendet werden, wobei die Pulsdauer bevorzugt unterhalb von 10 µs liegt.

Aufgrund der wesentlich dünneren Metallschicht der Vorplattierung zeichnet sich das erfindungsgemäße Verfahren gegenüber den Verfahren des Stands der Technik dadurch aus, dass eine erhebliche Menge an Beschichtungsmaterial eingespart werden kann. Es hat sich in überraschender Weise gezeigt, dass trotz der sehr geringen Schichtdicke der Metallschicht der Vorplattierung von höchstens 200mg/m² durch das lokal begrenzte Aufschmelzen der dünnen Metallschicht der Vorplattierung durch die Strahlung eine sehr dünne und sehr dichte Legierungsschicht an der Grenzschicht zwischen der dünnen Metallschicht der Vorplattierung und dem Stahlblech ausgebildet wird. Diese sehr dünne und gleichzeitig dichte Legierungsschicht führt trotz ihrer geringen Dicke zu einer erheblichen Erhöhung der Korrosionsbeständigkeit des erfindungsgemäß beschichteten Stahlblechs. Die sehr dünne Legierungsschicht mit einer Legierungsschichtauflage von maximal 200 mg/m² gewährleistet v.a. wegen ihrer hohen Dichte einen hervorragenden Korrosionsschutz. Es ist anzunehmen, dass dieser hohe Korrosionsschutz auch bereits bei geringeren Legierungsschichtauflagen von bspw. lediglich 20 bis 100 mg/m² erzielt werden kann. Allerdings ist es technologisch schwierig, die Schichtdicke der Vorplattierung auf Werte unterhalb von ca. 50 mg/m² einzustellen, da bspw. bei einer galvanischen Abscheidung der Metallschicht der Vorplattierung in den Beschichtungsbädern eine minimale Stromdichte eingestellt werden muss, um den galvanischen Beschichtungsprozess stabil zu halten.

Zum Aufschmelzen der dünnen Metallschicht der Vorplattierung hat sich eine Energiedichte der Strahlung, mit der die Temperatur der dünnen Metallschicht auf Werte oberhalb der Schmelztemperatur erhöht wird, von 0,03 - 3 J/cm² und bevorzugt von 0,1 - 2 J/cm² als geeignet erwiesen.

Falls mit dem erfindungsgemäßen Verfahren ein beschichtetes Stahlblech mit einem hohen Oberflächenglanz hergestellt werden soll, kann in einer zweckmäßigen Ausführungsform des erfindungsgemäßen Verfahrens nach dem Abscheiden der weiteren Metallschicht auf die dünne Metallschicht der Vorplattierung ein weiteres Aufschmelzen der gesamten Metallbeschichtung durch Erhitzen auf eine Temperatur oberhalb der Schmelztemperatur der Metallschicht erfolgen. Dieses Aufschmelzen der gesamten Metallbeschichtung erfolgt bevorzugt induktiv in einem Induktionsofen und führt zu einer glänzenden Oberfläche, wie sie bspw. für die Verwendung von metallbeschichteten Stahlblechen als Verpackungsstahl gewünscht wird. Das Aufschmelzen der Oberfläche der (weiteren bzw. der letzten) Metallbeschichtung kann jedoch auch mit hochenergetischen Strahlen, also - wie das Aufschmelzen der Vorplattierung - durch Bestrahlung mit elektromagnetischer Strahlung oder einem Elektronenstrahl erfolgen.

Mit dem erfindungsgemäßen Verfahren kann ein mit einer Metallbeschichtung versehenes Stahlblech erzeugt werden, bei dem in der Grenzschicht zwischen der Oberfläche des Stahlblechs und der Metallbeschichtung eine dünne Legierungsschicht ausgebildet ist, welche sich aus Eisenatomen des Stahlblechs und aus Metallatomen des Beschichtungsmaterials zusammen setzt, wobei die Dicke der Legierungsschicht höchstens 200 mg/m² beträgt und der Anteil des freien, nichtlegierten Metalls in der Metallbeschichtung wenigstens 50% beträgt und bevorzugt zwischen 80% und 99 % liegt. Die dünne Legierungsschicht entsteht dabei durch das Aufschmelzen der dünnen Metallschicht der Vorplattierung. Durch die nachfolgende Abscheidung einer weiteren (dickeren) Metallschicht auf die dünne Metallschicht der Vorplattierung ist ein relativ hoher metallischer (also nichtlegierter) Anteil in der Beschichtung vorhanden. Insbesondre wenn auf eine abschließende Aufschmelzung der weiteren (dickeren) Metallschicht gänzlich verzichtet wird oder diese nur kurzzeitig bei einer Temperatur erfolgt, die wenig oberhalb der Schmelztemperatur des Beschichtungsmaterials liegt, kann die gesamte Menge der weiteren Metallbeschichtung in nichtlegierter Form (also bspw. bei einer Zinnbeschichtung als freies Zinn) vorliegen. Dies ist bspw. vorteilhaft für die Schweißbarkeit des beschichteten Stahlblechs und verantwortlich für ein gutes Abstreckverhalten aufgrund der guten Schmierwirkung des metallischen (nichtlegierten) Anteils der Beschichtung.

Diese und weitere Vorteile des erfindungsgemäßen Verfahrens ergeben sich aus den nachfolgend beschriebenen Ausführungsbeispielen der Erfindung.

Das nachfolgend beschriebene Ausführungsbeispiel des erfindungsgemäßen Verfahrens betrifft die Verzinnung eines Stahlbands zur Erzeugung eines Weißblechs, welches bspw. zur Herstellung von Verpackungsbehältern, insbesondere Dosen für Lebensmittel verwendet werden kann. Die Erfindung ist jedoch nicht auf die Verzinnung von Stahlbändern beschränkt, und kann in entsprechender Weise auch bei der Beschichtung von Stahlblechen mit anderen Metallschichten, bspw. aus Zink oder Nickel, eingesetzt werden. Das Substrat (Stahlblech) liegt in dem beschriebenen Ausführungsbeispiel als Stahlband vor, welches nacheinander durch eine Mehrzahl von in Bandlaufrichtung hintereinander angeordneten Verzinnungstanks geleitet wird. Die Erfindung ist jedoch nicht auf die Beschichtung eines Stahlbands in einer solchen Bandbeschichtungsanlage beschränkt, sondern kann auch in anderen Beschichtungsanlagen angewandt werden, in denen bspw. Stahlbleche in Tafelform nacheinander in Beschichtungstanks mit einer metallischen Beschichtung versehen werden.

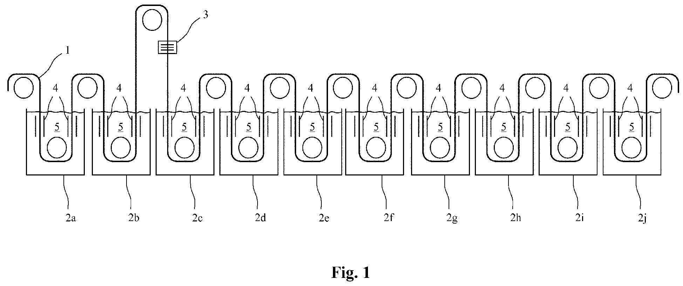

Zur Herstellung eines verzinnten Stahlblechs (Weißblech) wird ein als Stahlband 1 vorliegendes Stahlblech mit einer Bandgeschwindigkeit im Bereich von 100-700 m/min durch mehrere in Bandlaufrichtung hintereinander angeordnete Beschichtungsbäder 2a, 2b, 2c,... geführt, wie in **Figur 1** schematisch dargestellt. In dem Ausführungsbeispiel sind die Beschichtungsbäder 2 als Verzinnungstanks ausgebildet, in denen jeweils eine Zinnanode 4 angeordnet ist und welche mit einem Elektrolyten 5 (bspw. Methansulfonsäure) befüllt sind. Das durch die Verzinnungstanks bewegte Stahlblech 1 wird als Kathode geschaltet, um galvanisch auf beiden Seiten des Stahlbands eine dünne Zinnschicht abzuscheiden. In der in Fig. 1 schematisch dargestellten Beschichtungsvorrichtung sind insgesamt zehn hintereinander angeordnete Verzinnungstanks (2a, 2b, ... 2j) vorgesehen. Es können jedoch auch, je nach gewünschter Gesamtdicke der auf das Stahlband aufzubringenden Metallschicht, mehr oder weniger Verzinnungstanks eingesetzt werden. In jedem der Verzinnungstanks wird eine dünne Zinnschicht galvanisch auf den Oberflächen des Stahlblechs abgeschieden, wobei die pro Verzinnungstank abgeschiedene Schichtdicke zweckmäßig im Bereich von 50 - 500 mg/m² liegt. Die in den galvanischen Verzinnungstanks eingestellte Stromdichte beträgt bevorzugt zwischen 10 und 25 A/dm² und die Badtemperaturen des Elektrolyten liegen regelmäßig zwischen 30°C und 50°C.

In den vorderen Beschichtungsbädern (Verzinnungstanks) 2a, 2b wird zunächst (auf beiden Seiten des Stahlbands 1) eine dünne Vorplattierung aus Zinn (flash coating) elektrolytisch abgeschieden. Die Schichtdicke dieser Zinn-Vorplattierung beträgt zweckmäßig zwischen 50 und höchstens 200 mg/m². Bevorzugt liegt die Schichtdicke der dünnen Vorplattierung zwischen 80 und 150 mg/m² und besonders bevorzugt bei ca. 120 mg/m². Nach Durchlauf der ersten Beschichtungsbäder 2a, 2b wird die dort abgeschiedene dünne Zinnschicht der Vorplattierung auf einer Seite des Stahlblechs aufgeschmolzen. Hierfür wird auf einer Seite des Stahlblechs 1 eine elektromagnetische Strahlung, die bspw. mit einem Laser 3 erzeugt wird, auf die Oberfläche der dünnen Zinnschicht der Vorplattierung eingestrahlt. Hierfür ist eine Strahlungsquelle 3, bspw. ein Laser oder eine Elektronenkanone, zwischen dem zweiten Beschichtungsbad 2b und dem dritten Beschichtungsbad 2c angeordnet. Die Energiedichte und die Bestrahlungszeit des von der Strahlungsquelle 3 emittierten Strahlenbündels wird dabei so ausgewählt, dass die dünne Zinnschicht der Vorplattierung (flash coating), die in den vorderen Verzinnungstanks aufgebracht worden ist, vollständig über ihre gesamte Dicke bis zur Grenzschicht zum Stahlband aufgeschmolzen wird. Hierfür haben sich Energiedichten der Strahlung zwischen 0,03 und 3,0 J/cm² und bevorzugt zwischen 0,1 und 2,0 J/cm² als geeignet erwiesen. Zweckmäßig wird die dünne Zinnschicht der Vorplattierung durch Bestrahlung nur kurzzeitig auf Temperaturen zwischen dem Zinnschmelzpunlct (250°C) und 500°C und bevorzugt auf Temperaturen im Bereich von ca. 300°C bis 400°C erhitzt. Nach dem Aufschmelzen der dünnen Zinnschicht der Vorplattierung (flash coating) wird diese auf Temperaturen unterhalb der Schmelztemperatur des Zinns abgekühlt. Die Abkühlung erfolgt zweckmäßig und energiesparend durch eine Selbstkühlung über Wärmeleitung durch das noch kalte Stahlband 1.

Nach dem Aufschmelzen der dünnen Zinnschicht der Vorplattierung und dem Abkühlen wird das Stahlband 1 sequentiell durch die nachfolgenden hinteren Verzinnungstanks 2c, 2d, ... 2j geleitet. Dort werden auf beiden Seiten des Stahlbands weitere Zinnschichten galvanisch abgeschieden. Auch auf der aufgeschmolzenen dünnen Zinnschicht der Vorplattierung, die in den vorderen Verzinnungstanks 2a, 2b aufgebracht worden ist, werden weitere Zinnschichten abgeschieden, bis eine dicke Zinnschicht auf beiden Seiten des Stahlbands 1 in der gewünschten Schichtdicke vorliegt. Die Schichtdicke der gesamten Zinnschicht, welche sich aus der dünnen Zinnschicht der Vorplattierung und den weiteren Zinnschichten der hinteren Verzinnungstanks 2c, ... 2j zusammen setzt, beträgt zweckmäßig zwischen 0,5 g/m² und 12 g/m².

Nach dem Abscheiden der weiteren Zinnschicht kann das Stahlblech kurzzeitig wiederum auf Temperaturen oberhalb der Schmelztemperatur des Zinns erhitzt werden, um zumindest den Bereich der Oberfläche der Zinnschicht aufzuschmelzen. Durch dieses Aufschmelzen des Oberflächenbereichs der Zinnschicht und einem sich anschließenden Abschrecken im Wasserbad wird ein Oberflächenglanz der Zinnbeschichtung erzeugt. Anders als bei den aus dem Stand der Technik bekannten Verfahren muss die Zinnschicht jedoch nicht mehr vollständig über ihre gesamte Dicke aufgeschmolzen werden, um sowohl einen Oberflächenglanz als auch eine dünne Legierungsschicht an der Grenzschicht zwischen der Zinnbeschichtung und dem Stahlblech zu erzeugen. Es reicht vielmehr aus, zur Erzeugung des Oberflächenglanzes lediglich noch den oberflächennahen Bereich der Zinnbeschichtung aufzuschmelzen, weil durch das Aufschmelzen der dünnen Zinnschicht der Vorplattierung (flash coating), die in den vorderen Verzinnungstanks 2a, 2b aufgebracht worden ist, bereits eine dünne Legierungsschicht erzeugt worden ist, welche eine hohe Korrosionsbeständigkeit des Weißblechs sicherstellt. Für die Erzeugung des Oberflächenglanzes an der Oberfläche der Zinnbeschichtung reicht es aus, das beschichtete Stahlblech lediglich auf Temperaturen im Bereich von 232°C (Schmelztemperatur des Zinns) und ca. 300°C und bevorzugt auf Temperaturen zwischen 240°C und 260°C zu erhitzen. Hierdurch kann im Vergleich zu den aus dem Stand der Technik bekannten Aufschmelzverfahren erheblich Energie eingespart werden, weil bei den bekannten Aufschmelzverfahren die Zinnbeschichtung auf wesentliche höhere Temperaturen erhitzt werden muss, um sowohl den Oberflächenglanz als auch die Ausbildung der dünnen Legierungsschicht an der Grenzschicht zum Stahlblech zu erzeugen.

Die auf diese Weise hergestellten Weißbleche zeichnen sich durch eine sehr hohe Korrosionsbeständigkeit aus, die durch die dünne und sehr dichte Legiermgsschicht an der Grenzschicht zwischen der dünnen Zinnschicht der Vorplattierung und dem Stahlband bewirkt wird. An erfindungsgemäß hergestellten Weißblechen konnten ATC-Werte von weniger als 0,1 und sogar unterhalb von 0,05 µA/cm² gemessen werden, was auf eine sehr gute Korrosionsbeständigkeit hindeutet.

Die in dem beschriebenen Ausführungsbeispiel des erfindungsgemäßen Verfahrens hergestellten Weißbleche eignen sich besonders gut zur Herstellung von Verpackungsbehältern, insbesondere von Dosen für Lebensmittel. Die Seite des Stahlblechs, auf der die dünne Zinnschicht der Vorplattierung aufgeschmolzen worden ist, wird dabei zweckmäßig für die Doseninnenseite verwendet, weil diese Seite des Stahlblechs aufgrund der Ausbildung der Legierungsschicht an der Grenzschicht zwischen der dünnen Zinnbeschichtung und dem Stahlblech eine hohe Korrosionsbeständigkeit aufweist. Auf der anderen Seite des Stahlblechs bleibt das gesamte galvanisch abgeschiedene Zinn zweckmäßig als freies Zinn erhalten. Dies führt zu einem guten Abstreckverhalten des verzinnten Stahlblechs beim Abstreckziehen, weil dort das freie Zinn als Schmierstoff wirkt.

Die Erfindung ist nicht auf das beschriebene Ausführungsbeispiel beschränkt. So muss die dünne Zinnschicht der Vorplattierung nicht in den ersten beiden Verzinnungstanks 2a, 2b aufgebracht werden, sondern sie kann auch bereits nur in dem ersten Verzinnungstank 2a oder auch in den ersten drei Verzinnungtanks 2a - 2c abgeschieden werden. Die Strahlungsquelle 3 zum Aufschmelzen der Zinnschicht der Vorplattierung wird dann bspw. zwischen dem ersten Verzinnungstank 2a und dem zweiten Verzinnungstank 2b oder zwischen dem dritten Verzinnungstank 2c und dem vierten Verzinnungstank 2d angeordnet, usw. Die Dicke der in den vorderen Verzinnungstanks abgeschiedenen Zinnschicht wird durch geeignete Auswahl der Stromdichte dabei so eingestellt, dass die Gesamtdicke der dünnen Zinnschicht der Vorplattierung die erfindungsgemäße Obergrenze von 200 mg/m² nicht übersteigt. Es ist auch möglich, die dünne Zinnschicht der Vorplattierung nicht nur auf einer Seite sondern auf beiden Seiten des Stahlbands aufzuschmelzen, bevor die Abscheidung der weiteren Zinnschichten in den hinteren Verzinnungstanks erfolgt. Auf die zusätzliche Aufschmelzung der in den hinteren Verzinnungstanks abgeschiedenen (dicken) Zinnschicht kann verzichtet werden, wenn ein Oberflächenglanz der Zinnbeschichtung nicht erforderlich ist (bspw. für die Herstellung von Dosen im Abstreckziehverfahrenn (DWI).

Falls für das Aufschmelzen der dünnen Metallschicht der Vorplattierung eine Bestrahlung mit einem Elektronenstrahl erfolgt, ist es zweckmäßig, zumindest den Schritt des Verfahrens, in dem das Aufschmelzen der Vorplattierung erfolgt, im Vakuum (zweckmäßig mindestens 10⁻² mbar) durchzuführen. Dadurch können Energieverluste beim Bestrahlen mit dem Elektronenstrahl vermieden werden.

Das erfindungsgemäß hergestellte Stahlblech zeichnet sich durch eine sehr gute Korrosionsstabilität aus, die durch die korrosionsbeständige Legierungsschicht zwischen der Stahlblechoberfläche und der Metallbeschichtung bewirkt wird. Die dünne Legierungsschicht entsteht dabei durch das Aufschmelzen der dünnen Metallschicht der Vorplattierting. Durch die erfindungsgemäße Verfahrensführung kann die Dicke der Legierungsschicht durch geeignete Auswahl der Dicke der Vorplattierungsschicht eingestellt werden. Durch die nachfolgende Abscheidung einer dicken Metallschicht in den hinteren Beschichtungsbädern auf die dünne Metallschicht der Vorplattierung ist (bei vorgegebener Schichtauflage der Metallbeschichtung) ein relativ hoher metallischer (also nichtlegierter) Anteil in der Beschichtung vorhanden. Dies ist bspw. vorteilhaft für die Schweißbarkeit des beschichteten Stahlblechs (bspw. für die Herstellung von dreiteiligen Dosen) und verantwortlich für ein gutes Abstreckverhalten aufgrund der guten Schmierwirkung des metallischen (nichtlegierten) Anteils der Beschichtung. Zweckmäßig beträgt der metallische (nichtlegierte) Anteil in der Beschichtung wenigstens 50% und bevorzugt wenigstens 70% und liegt besonders bevorzugt zwischen 80% und 99%.

Es hat sich in überraschender Weise gezeigt, dass die sehr dünne Metallbeschichtung der Vorplattierung nach dem Aufschmelzen mittels Bestrahlung mit einem gerichteten Strahlenbündel einer elektromagnetischen Strahlung oder eines Elektronenstrahls eine gute Oberflächenstruktur und -ordnung aufweist, welche das weitere Abscheiden einer Metallbeschichtung auf die aufgeschmolzene und legierte Metallbeschichtung der Vorplattierung ermöglicht. Durch das Aufschmelzen werden im oberflächennahen Bereich der Metallbeschichtung der Vorplattierung stengeiförmige Wachstumslceime erzeugt, an denen die Metall-Atome des Beschichtungsmaterials bei der nachfolgenden Beschichtung anwachsen können und so eine gute Haftung der weiteren Metallbeschichtung an die (legierte) Metallbeschichtung der Vorplattierung gewährleisten.

## Patentansprüche

1. Verfahren zur Beschichtung eines Stahlblechs mit einer Metallschicht mit folgenden Schritten:
- Aufbringen einer ersten dünnen Metallschicht als Vorplattierung, wobei die Auflage der Metallschicht der Vorplattierung höchstens 200 mg/m² beträgt,
- Aufschmelzen der Metallschicht der Vorplattierung mittels Bestrahlung der Metallschicht mit einer elektromagnetischen Strahlung oder einem Elektronenstrahl, wobei die Metallschicht der Vorplattierung vollständig über ihre gesamte Dicke aufgeschmolzen und dadurch zumindest im Wesentlichen vollständig in eine Legierungsschicht bestehend aus Eisenatomen des Stahlblechs und Atomen des Metalls der Metallschicht umgewandelt wird,
- Aufbringen wenigstens einer weiteren Metallschicht auf die durch das Aufschmelzen erzeugte Legierungsschicht.

2. Verfahren nach Anspruch 1, **dadurch gekennzeichnet, dass** die aufgeschmolzene Metallschicht der Vorplattierung nach dem Aufschmelzen auf eine Temperatur unterhalb der Schmelztemperatur der Metallschicht abgekühlt wird.

3. Verfahren nach Anspruch 1, **dadurch gekennzeichnet, dass** die Bestrahlungszeit, in der die Metallschicht der Vorplattierung mit der elektromagnetischen Strahlung oder dem Elektronenstrahl bestrahlt wird, höchstens 10 µs beträgt und bevorzugt zwischen 10 ns und 1 µs liegt.

4. Verfahren nach einem der voranstehenden Ansprüche, **dadurch gekennzeichnet, dass** die Auflage der Metallschicht der Vorplattierung zwischen 50 mg/m² und 200 mg/m² liegt und bevorzugt 100 mg/m² beträgt.

5. Verfahren nach einem der voranstehenden Ansprüche, **dadurch gekennzeichnet, dass** die Energiedichte der elektromagnetischen Strahlung, die zum Aufschmelzen der Metallschicht der Vorplattierung eingestrahlt wird, zwischen 0,03 J/cm² bis 3 J/cm² und bevorzugt zwischen 0,1 und 2 J/cm² liegt.

6. Verfahren nach einem der voranstehenden Ansprüche, **dadurch gekennzeichnet, dass** nach dem Aufbringen der weiteren Metallschicht auf die Metallschicht der Vorplattierung das beschichtete Stahlblech zum Aufschmelzen der gesamten Metallbeschichtung induktiv auf eine Temperatur oberhalb der Schmelztemperatur der Metallschicht erhitzt wird.

7. Verfahren nach Anspruch 6, **dadurch gekennzeichnet, dass** nach dem Aufbringen der weiteren Metallschicht auf die Metallschicht der Vorplattierung das beschichtete Stahlblech auf eine Temperatur zwischen 232°C und 300°C und bevorzugt zwischen 240°C und 260°C erhitzt wird.

8. Verfahren nach einem der voranstehenden Ansprüche, **dadurch gekennzeichnet, dass** die Metallschicht der Vorplattierung beidseitig mittels galvanischer Abscheidung der Metallschicht auf das Stahlblech aufgebracht wird und dass das Aufschmelzen der Metallschicht der Vorplattierung lediglich auf einer Seite erfolgt.

9. Verfahren nach einem der voranstehenden Ansprüche, **dadurch gekennzeichnet, dass** das Aufschmelzen der Vorplattierung durch Einstrahlen eines gerichteten Strahlenbündels auf die Oberfläche der Metallschicht der Vorplattierung erfolgt, wobei das Strahlenbündel kontinuierlich oder auch gepulst, bevorzugt mit einer maximalen Pulsdauer von 1 µs, eingestrahlt wird.

10. Verfahren nach einem der voranstehenden Ansprüche, **dadurch gekennzeichnet, dass** das Beschichtungsmaterial der Metallschicht aus Zinn, Zink oder Nickel besteht, wobei die Metallschicht der Vorplattierung und die weitere Metallschicht aus demselben Beschichtungsmaterial sind.

11. Verfahren nach einem der voranstehenden Ansprüche, **dadurch gekennzeichnet, dass** die Beschichtungsauflage der weiteren Metallschicht(en) zwischen 0,5 g/m² und 12 g/m² liegt.

12. Verfahren nach einem der voranstehenden Ansprüche, **dadurch gekennzeichnet, dass** es sich bei der Metallschicht der Vorplattierung und der weiteren Metallschicht jeweils um eine Zinnschicht handelt und dass die Zinnschicht der Vorplattierung zum Aufschmelzen auf eine Temperatur zwischen 250°C und 500°C und bevorzugt zwischen 300°C und 400°C erhitzt wird, bevor die aufgeschmolzene Zinnschicht der Vorplattierung mit wenigstens einer weiteren Zinnschicht beschichtet wird.

13. Vorrichtung zur galvanischen Beschichtung eines Stahlbands (1) mit einer Metallschicht mit einer Mehrzahl von hintereinander angeordneten Beschichtungsbädern (2), durch die das Stahlband (1) in einer Bandlaufrichtung (v) geführt wird, um durch galvanische Abscheidung die Metallschicht aufzubringen, wobei in dem oder denin Bandlaufrichtung gesehen vordersten Beschichtungsbädern (2a, 2b) zunächst eine erste dünne Metallschicht als Vorplattierung und darauf in den nachfolgenden Beschichtungsbädern (2c, 2d, 2e,...) weitere Metallschichten aufgebracht werden, **dadurch gekennzeichnet, dass** in dem oder den in Bandlaufrichtung gesehen vordersten Beschichtungsbädern (2a, 2b) zunächst eine erste dünne Metallschicht als Vorplattierung mit einer Auflage von höchstens 200 mg/m² aufgebracht wird und in Bandlaufrichtung gesehen nach dem oder den vordersten Beschichtungsbädern (2a oder 2b) eine Strahlungsquelle (3) für eine elektromagnetische Strahlung oder einen Elektronenstrahl angeordnet ist, um die Metallschicht der Vorplattierung durch Bestrahlung mit einer elektromagnetischen Strahlung, insbesondere einem Laserstrahl, oder einem Elektronenstrahl aufzuschmelzen.

14. Mit einer Metallbeschichtung versehenes und mit einem Verfahren nach einem der Ansprüche 1 bis 12 hergestelltes Stahlblech, wobei in der Grenzschicht zwischen der Oberfläche des Stahlblechs und der Metallbeschichtung eine dünne Legierungsschicht ausgebildet ist, welche sich aus Eisenatomen des Stahlblechs und aus Metallatomen des Beschichtungsmaterials zusammen setzt, **dadurch gekennzeichnet, dass** die Auflage der Legierungsschicht höchstens 200 mg/m² beträgt und der Anteil des freien, nichtlegierten Metalls in der Metallbeschichtung wenigstens 50% beträgt und bevorzugt zwischen 80% und 99 % liegt.

## Claims

1. Method for coating a steel sheet with a coating of metal with the following steps:
- application of a first thin coating of metal as pre-plating (flash coating), wherein the coating thickness of the coating of metal of the pre-plating is at most 200 mg/m²,
- melting-on of the coating of metal of the pre-plating by means of irradiation of the coating of metal with electromagnetic radiation or an electron beam, wherein the coating of metal of the pre-plating is melted on completely over its entire thickness and is thereby converted at least essentially completely into an alloy layer consisting of atoms of iron of the steel sheet and atoms of the metal of the coating of metal,
- application of at least one further coating of metal on the alloy layer produced by the melting-on.

2. Method according to claim 1, **characterised in that** after the melting-on the melted on coating of metal of the pre-plating is cooled to a temperature below the melting temperature of the coating of metal.

3. Method according to claim 1, **characterised in that** the irradiation time for which the coating of metal of the pre-plating is irradiated with the electromagnetic radiation or the electron beam is at most 10 µs and preferably lies between 10 ns and 1 µs.

4. Method according to one of the preceding claims, **characterised in that** the coating thickness of the coating of metal of the pre-plating lies between 50 mg/m² and 200 mg/m² and is preferably 100 mg/m².

5. Method according to one of the preceding claims, **characterised in that** the energy density of the electromagnetic radiation which is beamed in to melt on the coating of metal of the pre-plating lies between 0.03 J/cm² and 3 J/cm² and preferably between 0.1 and 2 J/cm².

6. Method according to one of the preceding claims, **characterised in that** after the application of the further coating of metal on the coating of metal of the pre-plating, the coated steel sheet is heated inductively to a temperature above the melting temperature of the coating of metal to melt on the entire coating of metal.

7. Method according to claim 6, **characterised in that** after the application of the further coating of metal on the coating of metal of the pre-plating, the coated steel sheet is heated to a temperature between 232°C and 300°C and preferably between 240°C and 260°C.

8. Method according to one of the preceding claims, **characterised in that** the coating of metal of the pre-plating is applied to the steel sheet on both sides by means of galvanic deposition of the coating of metal and **in that** the melting-on of the coating of metal of the pre-plating is only carried out on one side.

9. Method according to one of the preceding claims, **characterised in that** the melting-on of the pre-plating is effected by beaming an aimed bundle of rays on to the surface of the coating of metal of the pre-plating, wherein the bundle of rays is beamed in continuously or pulsed, preferably with a maximum pulse duration of 1 µs.

10. Method according to one of the preceding claims, **characterised in that** the coating material of the coating of metal consists of tin, zinc or nickel, wherein the coating of metal of the pre-plating and the further coating of metal are of the same coating material.

11. Method according to one of the preceding claims, **characterised in that** the coating thickness of the further coating(s) of metal lies between 0.5 g/m² and 12 g/m².

12. Method according to one of the preceding claims, **characterised in that** the coating of metal of the pre-plating and the further coating of metal is in each case a coating of tin and **in that** the coating of tin of the pre-plating is heated to a temperature between 250°C and 500°C and preferably between 300°C and 400°C for melting on before the melted-on coating of tin of the pre-plating is coated with at least one further coating of tin.

13. Device for galvanic coating of a steel strip (1) with a coating of metal with a plurality of coating baths (2) which are arranged one behind another and through which the steel strip (1) is guided in a strip running direction (v) in order to apply the coating of metal by galvanic deposition, wherein in the front coating bath or baths (2a, 2b) viewed in the strip running direction firstly a first thin coating of metal is applied as pre-plating and on it further coatings of metal are applied in the following coating baths (2c, 2d, 2e, ...), **characterised in that** in the front coating bath or baths (2a, 2b) viewed in the strip running direction firstly a first thin coating of metal is applied as pre-plating with a coating thickness of at most 200 mg/m², and a radiation source (3) for electromagnetic radiation or an electron beam is arranged after the front coating bath or baths (2a or 2b) viewed in the strip running direction in order to melton the coating of metal of the pre-plating by irradiation with electromagnetic radiation, in particular a laser beam, or an electron beam.

14. Steel sheet provided with a coating of metal and produced with a method according to one of claims 1 to 12, wherein a thin alloy layer which is composed of atoms of iron of the steel sheet and of atoms of the metal of the coating material is formed in the boundary layer between the surface of the steel sheet and the coating of metal, **characterised in that** the coating thickness of the alloy layer is at most 200 mg/m² and the proportion of the free non-alloyed metal in the coating of metal is at least 50% and preferably lies between 80% and 99%.

## Revendications

1. Procédé de revêtement d'une tôle d'acier avec une couche métallique comprenant les étapes suivantes :
- l'application d'une première couche métallique mince comme préplacage, le revêtement de la couche métallique du préplacage s'élevant au maximum à 200 mg/m²,
- la fonte de la couche métallique du préplacage par irradiation de la couche métallique avec un rayonnement électromagnétique ou un rayon électronique, la couche métallique du préplacage étant complètement fondue sur son épaisseur entière et par là même étant convertie au moins sensiblement complètement en une couche d'alliage se composant d'atomes de fer de la tôle d'acier et d'atomes du métal de la couche métallique,
- l'application au moins d'une autre couche métallique sur la couche d'alliage générée par la fonte.

2. Procédé selon la revendication 1, **caractérisé en ce que** la couche métallique fondue du préplacage est refroidie après la fonte à une température inférieure à la température de fonte de la couche métallique.

3. Procédé selon la revendication 1, **caractérisé en ce que** la durée d'irradiation, pendant laquelle la couche métallique du préplacage est irradiée avec l'irradiation électromagnétique ou le rayon électronique, s'élève au maximum à 10 µs et de préférence est comprise entre 10 ns et 1 µs.

4. Procédé selon l'une quelconque des revendications précédentes, **caractérisé en ce que** le revêtement de la couche métallique du préplacage est compris entre 50 mg/m² et 200 mg/m² et s'élève de préférence à 100 mg/m².

5. Procédé selon l'une quelconque des revendications précédentes, **caractérisé en ce que** la densité d'énergie de l'irradiation électromagnétique qui est irradiée pour la fonte de la couche métallique du préplacage, est comprise entre 0,03 J/cm² et 3 J/cm² et de préférence entre 0,1 et 2 J/cm².

6. Procédé selon l'une quelconque des revendications précédentes, **caractérisé en ce que** la tôle d'acier revêtue est chauffée après l'application de l'autre couche métallique sur la couche métallique du préplacage pour la fonte du revêtement métallique entier de manière inductive à une température supérieure à la température de fonte de la couche métallique.

7. Système d'emballage selon la revendication 6, **caractérisé en ce que** la tôle d'acier revêtue est chauffée après l'application de l'autre couche métallique à la couche métallique du préplacage à une température comprise entre 232 °C et 300 °C et de préférence entre 240 °C et 260 °C.

8. Procédé selon l'une quelconque des revendications précédentes, **caractérisé en ce que** la couche métallique du préplacage est appliquée de part et d'autre par séparation galvanique de la couche métallique sur la tôle d'acier et **en ce que** la fonte de la couche métallique du préplacage est effectuée juste sur un côté.

9. Procédé selon l'une quelconque des revendications précédentes, **caractérisé en ce que** la fonte du préplacage est effectuée par irradiation d'un faisceau de rayons dirigé sur la surface de la couche métallique du préplacage, le faisceau de rayons étant irradié en continu ou aussi de manière pulsée de préférence avec une durée d'impulsion maximale de 1 µs.

10. Procédé selon l'une quelconque des revendications précédentes, **caractérisé en ce que** le matériau de revêtement de la couche métallique se compose d'étain, de zinc ou de nickel, la couche métallique du préplacage et l'autre couche métallique étant du même matériau de revêtement.

11. Procédé selon l'une quelconque des revendications précédentes, **caractérisé en ce que** la couche de revêtement de l'autre/des autres couche(s) métallique(s) est comprise entre 0,5 g/m² et 12 g/m².

12. Procédé selon l'une quelconque des revendications précédentes, **caractérisé en ce qu'**il s'agit pour la couche métallique du préplacage et de l'autre couche métallique respectivement d'une couche d'étain et **en ce que** la couche d'étain du préplacage est chauffée pour la fonte à une température entre 250 °C et 500 °C et de préférence entre 300 °C et 400 °C avant que la couche d'étain fondue du préplacage ne soit revêtue avec au moins une autre couche d'étain.

13. Dispositif pour le revêtement galvanique d'une bande d'acier (1) avec une couche métallique avec une pluralité de bains de revêtement (2) agencés les uns derrière les autres, par lesquels la bande d'acier (1) est guidée dans un sens de roulement de bande (v) afin d'appliquer la couche métallique par séparation galvanique, dans le ou les premiers bains de revêtement (2a, 2b) vu dans le sens de roulement de bande une première couche métallique mince étant tout d'abord appliquée comme préplacage et d'autres couches métalliques étant appliquées dessus dans les bains de revêtement (2c, 2d, 2e, ...) suivants, **caractérisé en ce que** dans le ou les premiers bains de revêtement (2a, 2b) dans le sens de roulement de bande, tout d'abord une première couche métallique mince est appliquée comme préplacage avec un revêtement au maximum de 200 mg/m² et vu dans le sens de roulement de bande après le ou les premiers bains de revêtements (2a ou 2b), une source de rayonnement (3) pour le rayonnement électromagnétique ou un rayon électronique est agencée afin de faire fondre la couche métallique du préplacage par irradiation avec un rayonnement électromagnétique, en particulier un rayon laser ou un rayon électronique.

14. Tôle d'acier fabriquée avec un procédé selon l'une quelconque des revendications 1 à 12 et pourvue d'un revêtement métallique, une couche d'alliage mince étant réalisée dans la couche limite entre la surface de la tôle d'acier et le revêtement métallique, laquelle couche d'alliage mince se compose d'atomes de fer de la tôle d'acier et d'atomes métalliques du matériau de revêtement, **caractérisée en ce que** le revêtement de la couche d'alliage s'élève au maximum à 200 mg/m² et la part du métal libre sans alliage dans le revêtement métallique s'élève au moins à 50 % et de préférence est comprise entre 80 % et 99 %.
